# EUROPEAN PATENT SPECIFICATION

(11) **EP 0 531 247 B1**
(45) Date of publication and mention of the grant of the patent: **29.03.1995**
(21) Application number: 92610065.2
(22) Date of filing: 04.09.1992
(51) Int. Cl.: F16H 25/20, F16H 57/04, F16H 1/14

(54) **Linear actuator**
Linearantrieb
Actionneur linéaire

(30) Priority: 04.09.1991 DK 1552/91
(43) Date of publication of application: 10.03.1993
(73) Proprietor: LINAK A/S, DK-6430 Nordborg (DK)
(72) Inventor: Jensen, Bent, DK-6430 Nordborg (DK)
(74) Representative: Pedersen, Soeren Skovgaard

(56) References cited:
- FR-A- 2 503 326
- FR-A- 2 595 780
- GB-A- 2 223 819
- US-A- 5 018 407

## Description

The invention relates to a linear actuator comprising a spindle device driven via a toothed gearing having two bevel gears, wherein the transmission shaft is in engagement with one gear and the spindle with the other one.

Such a linear actuator - according to the preamble of claim 1 - is shown and described in FR-A-2 595 780. It proves difficult in a simple manner to ensure greasing the gears. The gears have been greased from the factory with an antinoise grease, but this tends to be "cut" off the gears at a relatively early stage, resulting in metal grinding against metal and the gears consequently soon be worn down. The heavier the loads that the actuators be subject to, the sooner the shearing of the grease takes place and that at a time when greasing is most vital. Furthermore the centrifugal force itself causes the grease to be thrown off the gears, and the gravitational force likewise tends to make the grease run off.

The object of the invention was simply to find a constructively simple and inexpensive solution to ensure greasing of the gears during the entire service life of the actuator, including it being subject to heavy loads.

This is achieved by a solution according to the subject-matter of claim 1, wherein the gears at least at the gear rim area are fully contained inside their individual chambers between snuggly limiting surfaces such that the grease be retained in this area and be carried along on the gear rim, this being the correct place for performing said application of grease. The grease is so to speak forcibly supplied from one gear to the other where these are entering into engagement with one another. By applying grease of an antinoise nature the actuator will consequently retain a low noise level all its service life, this being of significance. Field experiments have proved that a construction according to the invention offers a service life of twice as usual for the gears. Further features of the invention are disclosed in the subsequent claims.

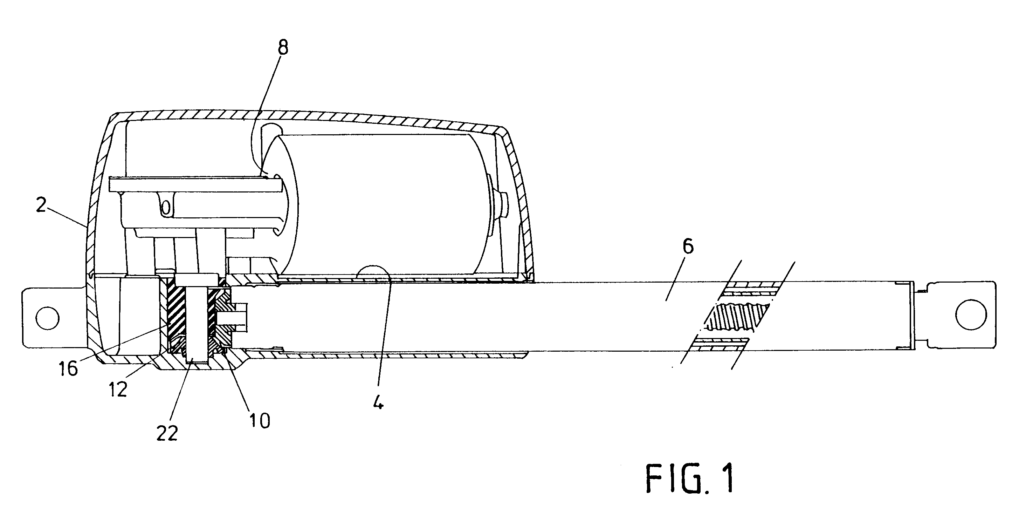

The actuator according to the invention will be described in further detail in the following with reference to the attached drawing illustrating an embodiment. The drawing illustrates as follows:-
Fig. 1 illustrates a longitudinal section through the actuator,

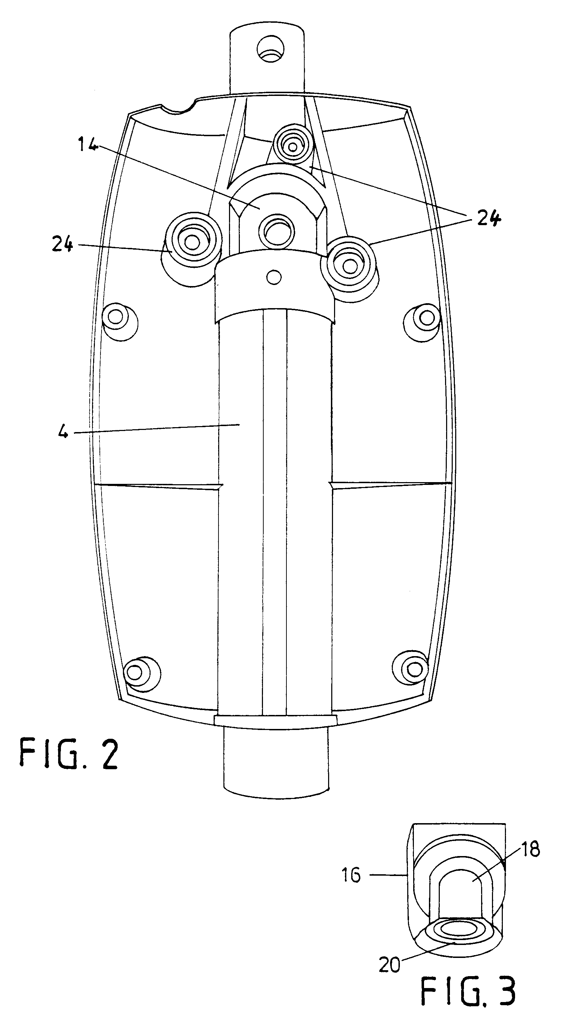

Fig. 2 illustrates the lower portion of the actuator casing seen from above, and
Fig. 3 is a perspective view from beneath of the infilling element.

The actuator comprises a casing 2 consisting of a lower and an upper portion having an internal tube-formed portion 4 in the lower portion in which a spindle device 6 is embedded. The upper portion of the casing accommodates an electric motor 8 integral with a mitre gear for driving the spindle via a toothed gearing consisting of two bevel gears 10, 12. The bevel gear 10 of the spindle device, i.e. the gear at the end of the actual spindle is attached to and protrudes from the end of the tube-formed portion 4 and the bevel gear 12 of the transmission shaft, i.e. the gear at the end of the transmission shaft 22 of the transmission unit is in engagement with the former at the lower side. The gears are contained inside a compartment 14, where the shape of the bottom corresponds to the lower side of the toothed gear. The lateral limits of the compartment are constituted of the tube-formed portion 4 containing the spindle device, and opposite to this a semicircular wall narrowly encircling the circumference of the transmission shaft gear as well as a straight section of wall at either side continuing the curved wall as tangents to connection to the end of the tube-formed portion of the spindle device. Inside the compartment is detachably inserted an infilling element 16, the lower end of which has a shape that corresponds to the upper side of the transmission gear, and the flat side of said element facing towards the spindle device having a shape that corresponds to the shape of the spindle gear. The gears are thus contained inside their separate chambers 18, 20 having the surfaces tightly against the gear rims such that the grease is retained on the rims eliminating any possibility of shearing the grease even in cases of heavy loads. The infilling element 16 has a recess to accommodate the transmission shaft 22. The element is detachably placed down into the compartment and is retained in position by the motor unit that is being supported by the compartment wall and has screws securing it to the three pillars 24 in the lower portion. The element 16 consequently also retains the gears in their positions.

It should be realized that the above only serves as an example of an embodiment and that the invention as specified in the following claims can be carried out in a variety of actual embodiments.

## Claims

1. A linear actuator comprising a spindle device (6) driven via a toothed gearing (10, 12), wherein the transmission shaft (22) is in engagement with one bevel gear (12) and the spindle (6) with the other bevel gear (10), characterized in that the bevel gears (10, 12), at least in the gear rim area, are totally contained inside their respective, separate chambers (18, 20), wherein the walls of the chambers (18,20) are in intimate contact with the gears (10, 12), and wherein the chambers (18, 20) are in connection with one another exclusively via the mutual engagement of the two gears (10, 12), whereby the grease is retained on the gears (10, 12) and forcibly applied with these, during running.

2. An actuator according to claim 1, characterized in that the chambers (18, 20) for the gears (10, 12) are designed in a separate element (16) coupled to the actuator casing (2).

3. An actuator according to claim 2, characterized in that the limit of one chamber (18) is constructed in a planar lateral face of the separate element (16) and that the limit of the other chamber (20) is constructed in an end face of the separate element (16).

4. An actuator according to claim 3, characterized in that a compartment (14) is constructed in the actuator for accommodating the separate element (16) where the support face of the bevel gear (10) of the spindle constitutes part of the lateral wall of the compartment and where the support face for the driven bevel gear (12) constitutes part of the floor or ceiling of the compartment.

5. An actuator according to claim 4, characterized in that the support face for the bevel gear (10) of the spindle is constituted of the end of the tube-formed portion (4) of the spindle device (6) and that the lateral wall of the compartment from there encircles the driven bevel gear (12) in intimate contact with its circumference, and that a continuous recess for the transmission shaft (22) is incorporated in the element (16).

6. An actuator according to claim 5, characterized in that the height of the element (16) is adapted to reaching the upper edge of the compartment (14) and is retained by the electric motor (8) being mounted above the compartment.

## Patentansprüche

1. Ein Linearantrieb, umfassend eine Spindeleinrichtung (6), die von einem Zahnradgetriebe (10, 12) angetrieben wird, wobei die Übertragungswelle (22) mit dem Kegelrad (12) und die Spindel (6) mit einem anderen Kegelrad (10) in Eingriff steht, **dadurch gekennzeichnet,** daß die Kegelräder (10, 12) zumindest im Zahnkranzbereich vollständig in ihren jeweiligen getrennten Kammern (18, 20) enthalten sind, wobei die Wände der Kammern (18, 20) in engem Kontakt mit den Getrieberädern (10, 12) stehen und wobei die Kammern (18, 20) miteinander ausschließlich über den gegenseitigen Eingriff der zwei Getrieberäder (10, 12) miteinander in Verbindung stehen, wodurch das Schmiermittel bzw. -fett auf den Getrieberädern (10, 12) gehalten und während des Betriebes zwangsweise mit diesen aufgebracht wird.

2. Ein Antrieb nach Anspruch 1, **dadurch gekennzeichnet,** daß die Kammern (18, 20) für die Getrieberäder (10, 12) in einem separaten mit dem Antriebsgehäuse (2) verbundenen Teil (16) ausgebildet sind.

3. Ein Antrieb nach Anspruch 2, **dadurch gekennzeichnet,** daß die Begrenzung einer Kammer (18) als planare Seitenfläche des separaten Teils (16) und die Begrenzung der anderen Kammer (20) in einer Stirnfläche des getrennten Teils (16) ausgebildet ist.

4. Ein Antrieb nach Anspruch 3, **dadurch gekennzeichnet,** daß in dem Antrieb zur Unterbringung des separaten Teils (16) ein Teilraum (14) ausgebildet ist, bei dem die Stützwand des Kegelrads (10) der Spindel einen Teil der Seitenwand des Teilraumes und die Stützfläche für das getriebene Kegelrad (12) einen Teil des Bodens oder der Decke des Teilraumes bildet.

5. Ein Antrieb nach Anspruch 4, **dadurch gekennzeichnet,** daß die Stützfläche für das Kegelrad (10) der Spindel aus dem Ende des rohrförmigen Abschnitts (4) der Spindeleinrichtung (6) gebildet ist und daß die Seitenwand des Teilraumes von dort das angetriebene Kegelrad (12) in engem Kontakt mit seinem Umfang umgibt und daß ein kontinuierlicher Rezeß für die Übertragungswelle (22) in das Teil (16) integriert ist.

6. Ein Antrieb nach Anspruch 5, **dadurch gekennzeichnet,** daß die Höhe des Teils (16) so ausgebildet ist, daß der obere Rand des Teilraumes (14) erreicht und von dem über dem Teilraum angebrachten Elektromotor (8) begrenzt wird.

## Revendications

1. Actionneur linéaire, comprenant un dispositif à arbre fileté (6) entraîné via un ensemble d'engrenages denté (10, 12), dans lequel l'arbre de transmission (22) est en engagement avec un engrenage chanfreiné (12) et l'arbre fileté (6) avec l'autre engrenage chanfreiné (10),
caractérisé en ce que les engrenages chanfreinés (10, 12), au moins dans la zone de bord des engrenages, sont totalement contenus à l'intérieur de leurs chambres respectives séparées (18, 20), les parois des chambres (18, 20) étant en contact intime avec les engrenages (10, 12) et les chambres (18, 20) étant en liaison l'une avec l'autre exclusivement via l'engagement mutuel des deux engrenages (10, 12), grâce à quoi la graisse est retenue sur les engrenages (10, 12) et est appliquée de façon forcée sur ceux-ci, en service.

2. Actionneur selon la revendication 1,
caractérisé en ce que les chambres (18, 20) pour les engrenages (10, 12) sont prévues dans un élément séparé (16) couplé au boîtier (2) de l'actionneur.

3. Actionneur selon la revendication 2,
caractérisé en ce que la limite d'une chambre (18) est construite dans une face latérale plane de l'élément séparé (16) et en ce que la limite de l'autre chambre (20) est construite dans une face d'extrémité de l'élément séparé (16).

4. Actionneur selon la revendication 3,
caractérisé en ce qu'un compartiment (14) est construit dans l'actionneur pour recevoir l'élément séparé (16), la face de support de l'engrenage chanfreiné (10) de l'arbre fileté constituant une partie de la paroi latérale du compartiment et la face de support pour l'engrenage chanfreiné entraîné (12) constituant une partie du plancher ou du plafond du compartiment.

5. Actionneur selon la revendication 4,
caractérisé en ce que la face de support pour l'engrenage chanfreiné (10) de l'arbre fileté est constituée de l'extrémité de la partie tubulaire (4) du dispositif à arbre fileté (6) et en ce que la paroi latérale du compartiment, de là, entoure l'engrenage chanfreiné entraîné (12) en contact intime avec sa circonférence, et en ce qu'un évidement continu pour l'arbre de transmission (22) est incorporé dans l'élément (16).

6. Actionneur selon la revendication 5,
caractérisé en ce que la hauteur de l'élément (16) est adaptée pour atteindre le bord supérieur du compartiment (14) et est limitée par le moteur électrique (8) monté au-dessus du compartiment.
